# EUROPEAN PATENT APPLICATION

(11) **EP 4 660 784 A1**
(43) Date of publication of application: **10.12.2025**
(21) Application number: 24750655.3
(22) Date of filing: 01.02.2024
(51) Int. Cl.: G06F 7/544, G06F 7/04, G06F 16/22, G06F 16/903, G06F 12/02

(54) **DATA PROCESSING METHOD AND APPARATUS, AND ELECTRONIC DEVICE AND STORAGE MEDIUM**

(30) Priority: 03.02.2023 CN 202310111187
(71) Applicant: Lemon Inc., Grand Cayman, KY1-1205 (KY)
(72) Inventor: WANG, Guangxing, Beijing 100028 (CN)
(74) Representative: Isarpatent
(86) International application number: PCT/SG2024/050059
(87) International publication number: WO 2024/162903

(57) **Abstract**

Disclosed in the embodiments of the present disclosure are a data processing method and apparatus, and an electronic device and a storage medium. The data processing method comprises: acquiring a first identifier of a target object entity; processing the first identifier by means of a preset function in a preset bloom filter, so as to obtain first data; and on the basis of a storage condition of the first data in a preset digit array, determining whether a subject entity executes a preset operation on the target object entity, wherein data in the preset bit array comprises: second data which is obtained by means of processing, in response to the subject entity executing the preset operation on an object entity, a second identifier of the object entity by means of the preset function.

## Description

### CROSS-REFERENCE TO RELATED APPLICATIONS

The present application claims priority to and is based on a Chinese application with an application number 202310111187.1 and a filing date of February 03, 2023, the aforementioned application is hereby incorporated by reference in its entirety.

### TECHNICAL FIELD

The present disclosure relates to the field of computer technology, especially relates to an information processing method, apparatus, electronic device and storage medium..

### BACKGROUND

For some application platforms, there is a need to quickly determine whether a user performs a certain operation on a certain entity. In related technologies, cache query combined with back-to-source query is often used to determine whether a user has performed a certain operation on a certain entity. As the number of users and entities continues to grow, more storage resources are needed to ensure high availability and accuracy of services.

### SUMMARY

In a first aspect, an embodiment of the present disclosure provides an information processing method, comprising:
acquiring a first identifier of a target object entity;
processing the first identifier through a preset function in a preset Bloom filter, to obtain first data;
determining whether a subject entity performs a preset operation on the target object entity, based on a storage status of the first data in a preset bit array,
wherein data in the preset bit array comprises: second data which is obtained by processing a second identifier of the object entity through the preset function in response to the subject entity performing the preset operation on the object entity.

In a second aspect, an embodiment of the present disclosure provides an information processing apparatus, comprising:
an acquisition module, configured to acquire a first identifier of a target object entity;
a processing module, configured to process the first identifier through a preset function in a preset Bloom filter, to obtain first data;
a checking module, configured to determine whether a subject entity performs a preset operation on the target object entity, based on a storage status of the first data in a preset bit array,
wherein data in the preset bit array comprises: second data which is obtained by processing a second identifier of the object entity through the preset function in response to the subject entity performing the preset operation on the object entity.

In a third aspect, an embodiment of the present disclosure further provides an electronic device, the electronic device comprising:
one or more processors;
a storage device for storing one or more programs,
wherein the one or more programs, when executed by the one or more processors, cause the one or more processors to implement the data processing method as described in any embodiment of the present disclosure.

In a fourth aspect, an embodiment of the present disclosure further provides a storage medium comprising computer executable instructions, which, when executed by a computer processor, are used to execute the data processing method as described in any embodiment of the present disclosure.

In a fifth aspect, an embodiment of the present disclosure further provides a computer program, comprising instructions, which, when executed by a processor, cause the processor to execute the data processing as described in any embodiment of the present disclosure.

### BRIEF DESCRIPTION OF THE DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the original and elements are not necessarily drawn to scale.
FIG. 1 is a flowchart of a data processing method provided by an embodiment of the present disclosure;
FIG. 2 is a schematic diagram of a preset bit array in a data processing method provided by an embodiment of the present disclosure;
FIG. 3 is a flowchart of a data processing method provided by an embodiment of the present disclosure;
FIG. 4 is a flowchart of a data processing method provided by an embodiment of the present disclosure;
FIG. 5 is a flowchart of writing data in a data processing method provided by an embodiment of the present disclosure;
FIG. 6 is a flowchart of reading data in a data processing method provided by an embodiment of the present disclosure;
FIG. 7 is a hierarchical schematic diagram of a preset bit array in a data processing method provided by an embodiment of the present disclosure;
FIG. 8 is a schematic frame diagram of processing a preset bit array in a data processing method provided by an embodiment of the present disclosure;
FIG. 9 is a schematic structural diagram of a data processing apparatus provided by an embodiment of the present disclosure;
FIG. 10 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

It may be understood that before using the technical solutions disclosed in the embodiments of the present disclosure, a user should be informed of the type, range of usage, usage scenario, etc. of personal information involved in the present disclosure in an appropriate manner in accordance with relevant laws and regulations, and the authorization of the user should be obtained.

After having analyzed the related technologies, it is found that the data in the cache is liable to be ejected when the storage resources are tight, which leads to a high misjudgment rate; the high access traffic of the source storage will also put pressure to the storage service, which is prone to misjudgment due to factors such as jitter. An embodiment of the present disclosure provides a data processing method, apparatus, electronic device and storage medium, which can improve the accuracy of judgment under limited storage resources.

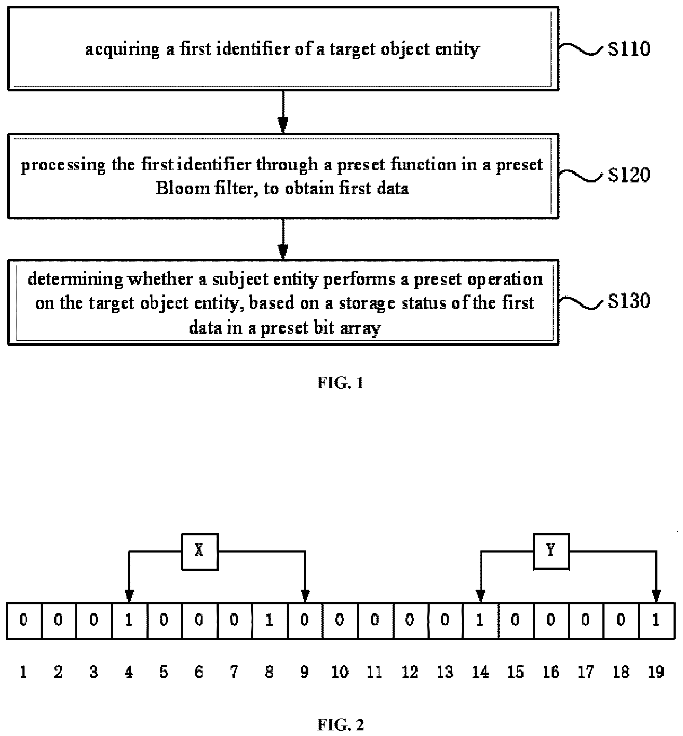

FIG. 1 is a flowchart of a data processing method provided by an embodiment of the present disclosure. The embodiment of the present disclosure is applicable to a situation of checking whether a subject entity has performed a preset operation on a target object entity. The method can be executed by a data processing apparatus, which can be realized in the form of software and/or hardware, and which can be configured in an electronic device, such as a back-end server of an application platform.

As shown in FIG. 1, the data processing method provided by the embodiment may include:
S110: acquiring a first identifier of a target object entity;
S120: processing the first identifier through a preset function in a preset Bloom filter, to obtain first data;
S130: determining whether a subject entity performs a preset operation on the target object entity, based on a storage status of the first data in a preset bit array,

Among them, data in the preset bit array may comprise: second data which is obtained by processing a second identifier of the object entity through the preset function in response to the subject entity performing the preset operation on the object entity.

In an embodiment of the present disclosure, an entity that can initiate a preset operation can be referred to as a subject entity, and an entity on which the preset operation can be performed can be referred to as an object entity. Among them, the subject entity, the object entity and the preset operation can be predefined according to specific application scenarios, for example, in a social scenario, the subject entity and the object entity can both be account entities, and the preset operation may include an operation such as attention, reporting, or the like; for another example, in a comment scenario, the subject entity can be an account entity, the object entity can be a comment, and the preset operation may include an operation such as like, dislike, etc.

Among them, a target object entity can be considered as an object entity that needs to judge whether the preset operation has been performed by the subject entity at present. The first identification of the target object entity can be considered as information that can uniquely characterize the target object entity, and can be composed of at least one of elements such as letter, number, special symbol, or the like. It can be understood that the second identifier of the object entity may be essentially the same as the first identifier of the target object entity. When an object entity serves as the target object entity that needs to be judged at present, its second identifier can be called the first identifier.

The Bloom filter may include at least one preset function therein. Among them, the at least one preset function can, for example, include at least one hash function (such as hash function, etc.), and can be used to map information into a binary vector. Among them, the number of dimensions of the mapped vector can be the same as the number of bits of the preset bit array, and the mapped vector can be stored by the preset bit array. Among them, the element at each position in the preset bit array can initially be zero, and when the mapped vector is stored, the elements in the preset bit array at positions corresponding to dimensions of 1 in the vector can be set to 1, and the elements in the preset bit array at other positions can be kept to 0. After a target dimension with value of 1 in the first data have been determined, if the value in the target dimension in the preset bit array is also 1, it can be considered that the first data is stored in the preset bit array.

In an embodiment of the present disclosure, for each operation behavior of each subject entity, a corresponding Bloom filter can be built in advance. When the subject entity performs a certain preset operation on any object entity, a preset function in a corresponding Bloom filter can be used to process the second identifier of the object entity to obtain the second data; where the second data can be considered as a binary vector. After that, the second data can be stored in a preset bit array corresponding to the Bloom filter, so as to record through the preset bit array that the subject entity has performed the preset operation on the object entity. The process of storing the second data in the preset bit array can be regarded as: determining a target bit in the second data with a dimensional value of 1, and setting the value of a bit in the preset bit array corresponding to the target bit to 1. For example, if the value of the fifth dimension in the second data is 1, after the second data is stored in the preset bit array, the value of the fifth dimension (i.e. the fifth bit) in the preset bit array is also 1.

Among them, the preset bit array can be stored in a storage space such as Redis, etc. In one implementation, each operation behavior of each subject entity can correspond to an unique key, and when the preset bit array is stored, the key corresponding to the preset bit array can be stored concurrently, so that preset bit arrays corresponding to different operation behaviors and/or different subject entities can be distinguished.

Accordingly, after at least one target object entity has been acquired, the process of checking whether the subject entity performs a preset operation on each target object entity based on the Bloom filter may include: acquiring a Bloom filter and a preset bit array corresponding to the current subject entity and the preset operation; processing the first identifier of each target object entity through a preset function of the Bloom filter to obtain each first data; wherein, the first data can be considered as a binary vector; by checking whether an element in the preset bit array corresponding to the dimension of 1 in each first data is also 1, it can be determined whether the subject entity performs the preset operation on each target object entity.

In some embodiments, dimensions in the first data whose values are 1 can be determined; and in response to that not all elements corresponding to the dimensions in the preset bit array are 1, it can be determined that the subject entity has not performed the preset operation on the target object entity. Wherein, if the elements of the preset bit array corresponding to the dimensions of 1 in the first data are not all 1, it can be determined that the subject entity has not performed the preset operation on the target object entity; if all the elements of the preset bit array corresponding to the dimensions of 1 in the first data are 1, there is a high probability that the subject entity has performed a preset operation on the target object entity.

Exemplary, FIG. 2 is a schematic diagram of a preset bit array in a data processing method provided by an embodiment of the present disclosure. Referring to FIG. 2, the preset bit array can be, for example, a 19-bit binary array; X may represent a first data corresponding to the first identifier of the target object entity A, and Y may represent a first data corresponding to the first identifier of the target object entity B. FIG. 2 shows the elements in the preset bit array corresponding to the dimension of 1 in X and the elements in the preset bit array corresponding to the dimension of 1 in Y. Moreover, the elements in the preset bit array corresponding to the dimension of 1 in X are not all 1, so it can be determined that the subject entity has not performed the preset operation on the target object entity A; the elements in the preset bit array corresponding to the dimension of 1 in Y are all 1, so it can be determined that the subject entity has performed the preset operation on the target object entity B with a high probability.

In an embodiment of the present disclosure, a bit in the preset bit array can be set in advance according to experience or experiments, so as to ensure the accuracy of judging whether the subject entity has performed the preset operation on the target object entity. Moreover, because the spatial efficiency and query efficiency of Bloom filter far exceed a general algorithm, it can be quickly and accurately judged whether the subject entity has performed the preset operation on the target object entity under limited storage resources.

In some alternative implementations, the subject entity may include an account entity, the object entity may include a content entity, and the preset operation may include at least one of the following: like, dislike, forward, comment, and value attribute entity transfer.

Among them, the content entity can be a multimedia object including at least one modality such as text, image, video, audio, etc. Among them, the value attribute entity transfer can be considered as a reward operation by an account entity on a content entity. In addition, in addition to the preset operations disclosed above, the account entity can also perform other preset operations on the content entity, such as reporting, which is not exhaustive here.

In the related art, when it is judged whether an account entity has performed the like/dislike operation or the like on a content entity, cache query is usually used in combination with back-to-source query. For example, the corresponding cache data and source storage data can be maintained based on the build time of the content entity. For example, operations of account entities related to content entities built within 20 days can be stored in the cache, and operations of account entities related to content entities built beyond 20 days can be stored in the source storage space. Therefore, it is possible to check whether the account entity has performed a preset operation on a certain content entity by querying the cache data and the source storage data.

In the related art, with the increasing number of account entities and content entities, internal data is very liable to be ejected under the condition of limited cache resources, which leads to a high misjudgment rate; moreover, the increasing back-to-source access traffic brings great pressure to the storage service of the source storage space, which is liable to lead to misjudgment due to storage service jitter or degradation of request, which further increases the misjudgment rate.

Among these alternative implementations, Bloom filter is a typical processing method of mapping a large amount of information by means of a small amount of data, which can handle large business requests with very small resource occupation, and is a very good choice for such sparse data for checking whether the subject entity has performed the preset operation on the content entity. By using Bloom filter to judge whether the account entity has performed the preset operation on the content entity, it can be quickly and accurately judged whether the subject entity has performed the preset operation on the target object entity under limited storage resources, thereby reducing the occupation of cache resources and the calling of back-to-source service.

The technical scheme of the embodiment of the present disclosure acquires a first identifier of a target object entity; processes the first identifier through a preset function in a preset Bloom filter, to obtain first data; determines whether a subject entity performs a preset operation on the target object entity, based on a storage status of the first data in a preset bit array, wherein data in the preset bit array comprises: second data which is obtained by processing a second identifier of the object entity through the preset function in response to the subject entity performing the preset operation on the object entity. The Bloom filter can map information to a bit array, which occupies less storage resources and has higher query efficiency, compared with directly storing information. In an embodiment of the present disclosure, based on the storage status of the processing result of the Bloom filter in the corresponding preset bit array, it can be quickly and accurately judged whether the subject entity has performed the preset operation on the target object entity under limited storage resources.

The embodiment of the present disclosure can be combined with various alternatives in the data processing method provided in the above embodiment. The data processing method provided by the embodiment can judge whether the subject entity has performed the preset operation on the target object entity on the basis of the data in the preset bit array in conjunction with the data in the preset cache space, or further in conjunction with the data in the source storage space, which can further improve the judgment accuracy, and can still reduce the occupation of cache resources and the calling of back-to-source service compared with the traditional scheme.

In the data processing method provided by an embodiment of the present disclosure, determining whether a subject entity performs a preset operation on the target object entity, based on a storage status of the first data in a preset bit array, may include:
when the first data is not stored in the preset bit array, determining that the subject entity does not perform the preset operation on the target object entity; when the first data is stored in the preset bit array, determining a query identifier based on the first identifier and a subject identifier of the subject entity, and based on a storage status of the query identifier in a preset cache space, determining whether the subject entity performs the preset operation on the target object entity; wherein the data in the preset cache space may include a storage identifier which is generated based on a second identifier of the object entity and the subject identifier, when the second data has been stored in the preset bit array.

There may exist a case that at least some of dimensions have the same values, which all are 1, in the second data obtained by processing different second identifiers through the preset function. This may lead to when the second data is stored into the preset bit array, 1 at the same position in the preset bit array may correspond to a plurality of second data. With the increasing amount of the second data stored in the preset bit array, it is possible that before the second data is stored in the preset bit array, the element in the preset bit array at the corresponding position of the dimension of 1 in the second data has been set to 1, that is, the second data has been stored in the preset bit array. At this time, the storage identifier can be generated based on the second identifier of the object entity and the subject identifier of the subject entity, for example, they can be spliced into the storage identifier according to a preset splicing rule, and then the storage identifier can be stored in the preset cache space, to assist the preset bit array to record that the subject entity has performed the preset operation on the object entity.

Accordingly, when it is determined whether the subject entity performs a preset operation on the target object entity, a pre-judgment can be made based on the storage status of the first data in the preset bit array, and the pre-judgment step can include: when the first data is not stored in the preset bit array, determining that the subject entity does not perform the preset operation on the target object entity; when the first data is stored in a preset bit array, it may be that the subject entity has performed a preset operation on the target object entity, or it may be that the subject entity has performed a preset operation on other object entities, and further judgment can be made based on the data in the preset cache space.

The step of performing further judgment based on the data in the preset cache space may include: determining a query identifier based on the first identifier and the subject identifier of the subject entity; where the query identifier and the storage identifier are generated in the same way, when an object entity serves as a target object entity that needs to be judged at present, the storage identifier generated based on its second identifier can also be called the query identifier; when the query identifier is not stored in a preset cache space, it can be determined that the subject entity does not perform the preset operation on the target object entity; when the query identifier is stored in the preset cache space, it can be determined that the subject entity has performed the preset operation on the target object entity.

In the embodiment of the present disclosure, by recording the storage identifier in the preset cache space, even when it is uncertain whether the subject entity performs the preset operation on the target object entity based on the data in the preset bit array, further judgment basis can be provided and the judgment accuracy can be improved. Moreover, compared with the traditional scheme which records the recent operation behaviors of related accounts of all object entities in the cache, this scheme only needs to record in the preset cache space the preset behaviors of the subject entities for the object entities stored in the preset bit array, and its cache occupation is greatly reduced. Experiments show that compared with the traditional scheme, this scheme can reduce the cache occupation by at least 40% and reduce the access to the cache by about 90%.

In addition, in some further implementations, the data processing method may further include:
If the query identifier is not stored in the preset cache space, determining whether the subject entity performs a preset operation on the target object entity based on the storage status of the query identifier in the preset source storage space; wherein, the data in the preset source storage space may include, in response to the subject entity performing the preset operation on the object entity, a storage identifier generated based on the second identifier of the object entity and the subject identifier.

Due to the short time-limit of the data in the preset cache space, there may be a case where the storage identifier stored in the preset cache space has expired and been cleared. If the query identifier is not stored in the preset cache space, there is a possibility that the storage identifier corresponding to the query identifier has been cleared. Therefore, in these further implementations, while the subject entity performs a preset operation on the object entity, the storage identifier can be generated based on the second identifier of the object entity and stored in the preset source storage space. Among them, the preset source storage space can include a storage space which has a long storage time-limit and in which internal data is not easy to be automatically cleared.

Accordingly, if the query identifier is not stored in the preset cache space, the back-to-source query can be further performed, that is, it is queried whether the query identifier is stored in the preset source storage space. When the query identifier is not stored in the preset source storage space, it can be determined that the subject entity does not perform a preset operation on the target object entity; when the query identifier is stored in the preset source storage space, it can be determined that the subject entity has performed the preset operation on the target object entity.

In these further implementations, because it can be accurately judged whether the subject entity performs the preset operation on the target object entity based on the data in the preset cache space and the preset bit array in most cases, the calling of the back-to-source service can be greatly reduced, thereby avoiding bringing pressure on the storage service stored in the source, and the accuracy of judgment based on the data in the source storage space can be guaranteed. The judgment of whether the subject entity performs the preset operation on the target object entity can be implemented based on the data in the preset bit array, in conjunction with the data in the preset cache space and the data in the source storage space, which can make the judgment accuracy higher than 99%.

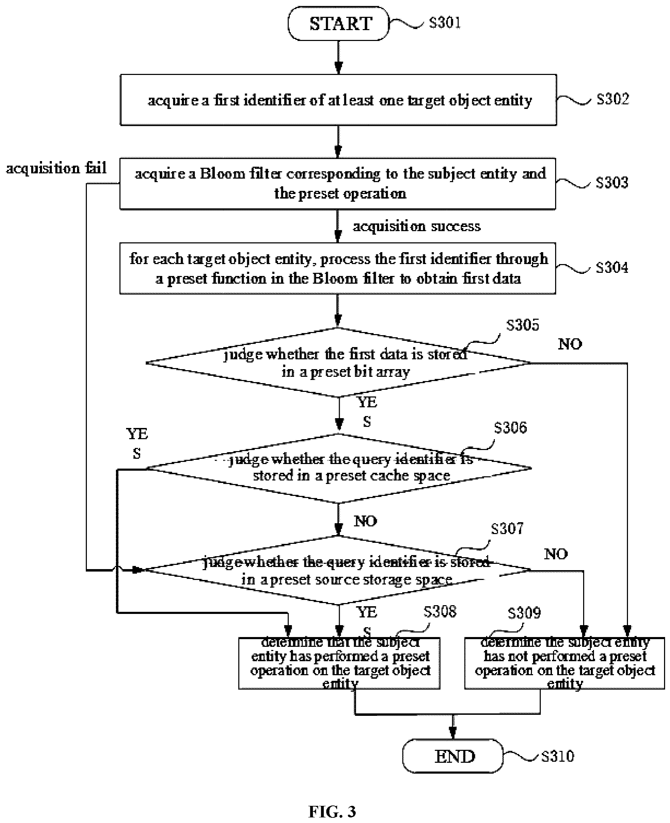

Exemplary, FIG. 3 is a flowchart of a data processing method provided by an embodiment of the present disclosure. As shown in FIG. 3, a data processing method may include:
S301: start the process;
S302, acquire a first identifier of at least one target object entity;
S303, acquire a Bloom filter corresponding to the subject entity and the preset operation; if the acquisition is successful, proceed to S304; if the acquisition fails, proceed to S307;
S304, for each target object entity, process the first identifier through a preset function in the Bloom filter to obtain first data;
S305, judge whether the first data is stored in a preset bit array; if yes, proceed to S306; if not, proceed to S309;
S306, judge whether the query identifier is stored in a preset cache space; wherein the query identifier is determined based on the first identifier and the subject identifier of the subject entity; if yes, proceed to S308; if not, proceed to S307;
S307, judge whether the query identifier is stored in a preset source storage space; wherein the query identifier is determined based on the first identifier and the subject identifier of the subject entity; if yes, proceed to S308; if not, proceed to S309;
S308: determine that the subject entity has performed a preset operation on the target object entity; proceed to S310;
S309: determine that the subject entity has not performed the preset operation on the target object entity; proceed to S310;
S310: end the process.

If it is judged that the query identifier is stored in the preset source storage space, but not in the preset cache space, it can be considered that although the query identifier has been cleared from the preset cache space, there is still a demand for querying of the query identifier, therefore, the query identifier can be rewritten in the preset cache space at this time, so as to facilitate the quick query of the query identifier next time and reduce the amount of back-to-source access.

In this embodiment, the data in the preset bit array can support most judgment of whether the target object entities are subjected to the preset operation, which can reduce the storage space occupation and improve the judgment speed; because the reading efficiency of the data in the preset cache space is high, the judgment speed can be ensured by first using the data in the preset cache space to assist the preset bit array to judge; due to the long timeliness of the data in the preset source storage space, the judgment accuracy can be guaranteed by finally using the data in the preset source storage space to assist the preset bit array and the preset cache space to judge.

According to the technical scheme of the embodiment of the present disclosure, the judgment of whether the subject entity performs the preset operation on the target object entity can be implemented based on the data in the preset bit array in conjunction with the data in the preset cache space or further in conjunction with the data in the source storage space, so that the judgment accuracy can be further improved, and compared with the traditional scheme, the occupation of cache resources and the calling of the back-to-source service can still be reduced. In addition, the data processing method provided by the embodiment of this disclosure belongs to the same concept as the data processing method provided by the above-mentioned embodiment, and the technical details not described in detail in this embodiment can refer to the above-mentioned embodiment, and the same technical features have the same beneficial effects in this embodiment as that in the above-mentioned embodiment.

The embodiment of the present disclosure can be combined with various alternatives in the data processing method provided in the above embodiment. In the data processing method provided by this embodiment, the second build time of an object entity can represent a probability of the object entity being the target object entity to a certain extent, and it can be considered that the smaller the difference between the second build time and the current time, the greater the probability of the corresponding object entity being the target object entity.

In this embodiment, by storing second data corresponding to an object entity, whose difference between the second build time and the operation time is not greater than the first preset value, in the preset bit array, the preset operation by the subject entity on the object entities recently built can be recorded in the preset bit array. Accordingly, when checking whether the subject entity has performed the preset operation on the target object entity, because the recently built object entity is more liable to be used as the target object entity, most of judgment that subject entity have performed the preset operation on the target object entity can be covered by the data in the preset bit array, thereby further reducing the occupation of storage resources. On this basis, by storing the storage identifier corresponding to the object entity, whose difference between the second build time and the operation time is greater than the first preset value, in the preset cache space, the preset operation by the subject entity on the object entity built not recently can be recorded in the preset cache space, which can effectively supplement the judgment based on the preset bit array and further improve the judgment accuracy.

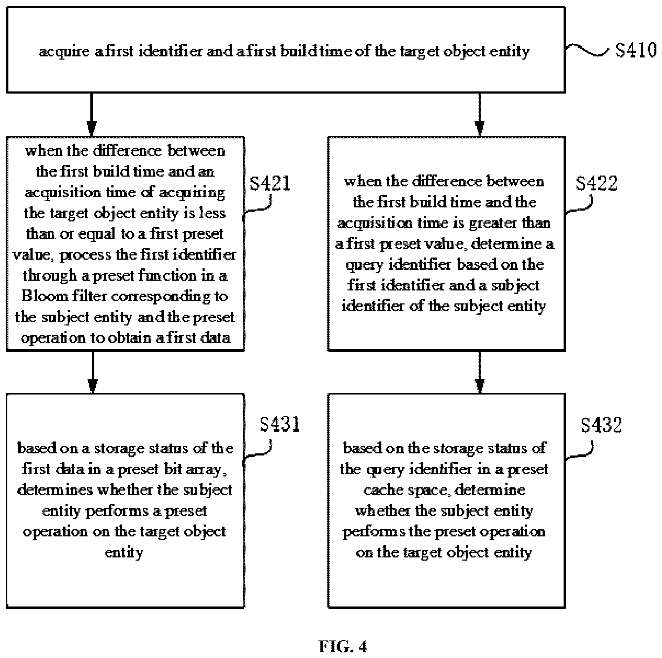

FIG. 4 is a flowchart of a data processing method provided by an embodiment of the present disclosure. As shown in FIG. 4, the data processing method provided by this embodiment may include:
S410: acquire a first identifier and a first build time of the target object entity;
S421: when the difference between the first build time and an acquisition time of acquiring the target object entity is less than or equal to a first preset value, process the first identifier through a preset function in a Bloom filter corresponding to the subject entity and the preset operation to obtain a first data;
S431: based on a storage status of the first data in a preset bit array, determines whether the subject entity performs a preset operation on the target object entity;
Among them, the data in the preset bit array can include: second data which is obtained by processing the second identifier of the object entity through the preset function, when the subject entity performs the preset operation on the object entity and a difference between a second build time of the object entity and an operation time when the subject entity performs the preset operation on the object entity is less than or equal to the first preset value;
S422: when the difference between the first build time and the acquisition time is greater than a first preset value, determine a query identifier based on the first identifier and a subject identifier of the subject entity;
S432: based on the storage status of the query identifier in a preset cache space, determine whether the subject entity performs the preset operation on the target object entity;
Among them, the data in the preset cache space may include: a storage identifier which is generated based on a second identifier of the object entity and the subject identifier, when the subject entity performs the preset operation on the object entity and a difference between the second build time of the object entity and the operation time is greater than the first preset value.

In the embodiment of the present disclosure, a first preset value (for example, 90 days) can be set in advance according to an actual application scenario, so as to ensure that an object entity, whose difference between the second build time and the operation time is not greater than the first preset value, is more likely to be the target object entity. Therefore, it can be judged whether to store the second data corresponding to the object entity in the preset bit array or to store the query identifier corresponding to the object entity in the preset cache space based on the first preset value, therefore, on the basis of ensuring the accuracy of judging whether the subject entity performs the preset operation on the target object entity in the follow-up, the storage resource utilization can be more reasonable.

In addition, the data in the preset cache space in this embodiment may also include a storage identifier generated based on the second identifier of the object entity and the subject identifier when the second data has been stored in the preset bit array. Accordingly, step S431 may include: when the first data is not stored in the preset bit array, determining that the subject entity does not perform the preset operation on the target object entity; when the first data is stored in the preset bit array, determining a query identifier based on the first identifier and a subject identifier of the subject entity, and based on a storage status of the query identifier in a preset cache space, determining whether the subject entity performs the preset operation on the target object entity.

Further, based on a storage status of the query identifier in a preset cache space, determining whether the subject entity performs the preset operation on the target object entity may include: when the query identifier is not stored in a preset cache space, determining whether the subject entity performs the preset operation on the target object entity based on a storage status of the query identifier in a preset source storage space; wherein the data in the preset source storage space may include, in response to the subject entity performing the preset operation on the object entity, a storage identifier generated based on the second identifier of the object entity and the subject identifier.

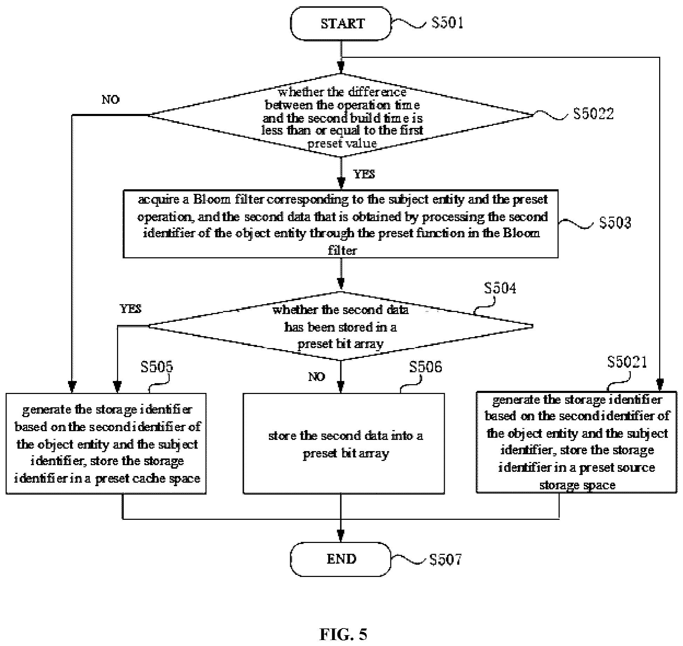

Exemplary, FIG. 5 is a flowchart of writing data in a data processing method provided by an embodiment of the present disclosure. FIG. 5 is a flow of writing the second data or storage identifier into a preset bit array, a preset cache space or a preset source storage space in a data processing method, which may include:
S501: in response to the subject entity performing a preset operation on the object entity, start the flow;
S5021: generate the storage identifier based on the second identifier of the object entity and the subject identifier, store the storage identifier in a preset source storage space; proceed to S507;
S5022: judge whether the difference between the operation time and the second build time of the object entity is less than or equal to the first preset value; if yes, proceed to S503; if not, proceed to S505;
S503: acquire a Bloom filter corresponding to the subject entity and the preset operation, and the second data that is obtained by processing the second identifier of the object entity through the preset function in the Bloom filter;
S504, judge whether the second data has been stored in a preset bit array; if yes, proceed to S505; if not, proceed to S506;
S505. generate the storage identifier based on the second identifier of the object entity and the subject identifier, store the storage identifier in a preset cache space; proceed to S507;
S506, store the second data into a preset bit array; proceed to S507; ;
S507: end the process.

In addition, when "storing the storage identifier in the preset source storage space", "storing the storage identifier in the preset cache space" and "storing the second data in the preset bit array", if the storage fails, asynchronous retry can be performed to improve the disaster tolerance when writing data.

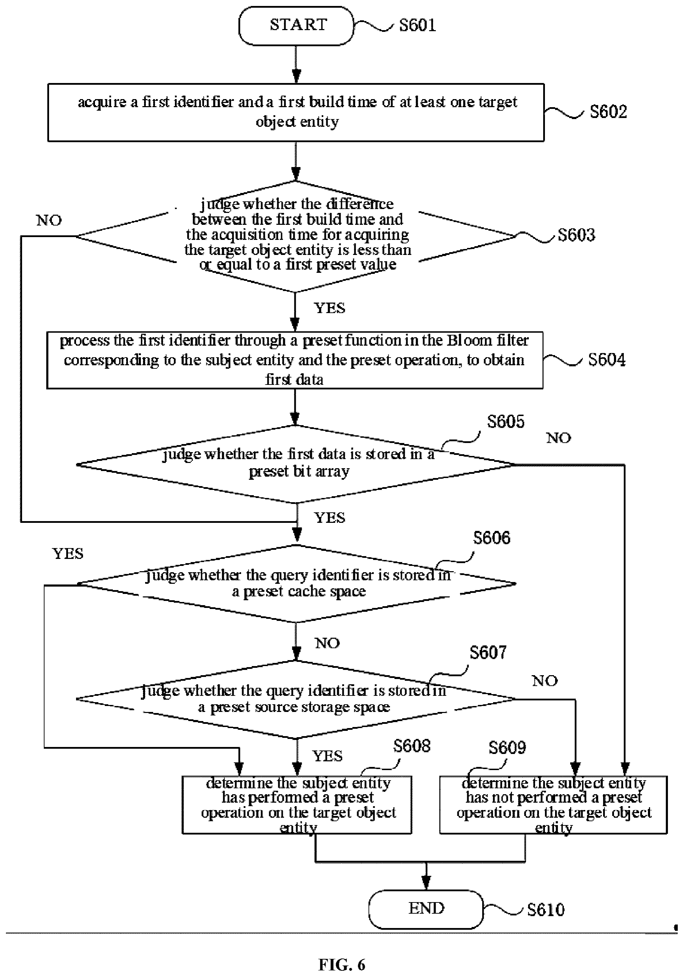

For example, FIG. 6 is a flowchart of reading data in a data processing method provided by an embodiment of the present disclosure. FIG. 6 is a flow in the data processing method of checking whether the subject entity performs a preset operation on the target object entity based on the data in the preset bit array, the data in the preset cache space or the data in the preset source storage space that has been read, which can be considered as corresponding to the flow of writing data as shown in FIG. 5, and may include:
S601: start the process;
S602: acquire a first identifier and a first build time of at least one target object entity;
S603: for each target object entity, judge whether the difference between the first build time and the acquisition time for acquiring the target object entity is less than or equal to a first preset value; if yes, proceed to S604; if not, proceed to S606;
S604: process the first identifier through a preset function in the Bloom filter corresponding to the subject entity and the preset operation, to obtain first data;
S605, judge whether the first data is stored in a preset bit array; if yes, proceed to S606; if not, proceed to S609;
S606, judge whether the query identifier is stored in a preset cache space; wherein the query identifier is determined based on the first identifier and the subject identifier of the subject entity; if yes, proceed to S608; if not, proceed to S607;
S607: judge whether the query identifier is stored in a preset source storage space; if yes, proceed to S608; if not, proceed to S609;
S608: determine that the subject entity has performed a preset operation on the target object entity; proceed to S610;
S609: determine that the subject entity has not performed the preset operation on the target object entity; proceed to S610;
S610: end the process.

In addition, in the process shown in FIG. 5, an time-limit period can be added when "storing the storage identifier in the preset cache space"; accordingly, in the process shown in FIG. 6, if the data in the preset cache space has exceeded the time-limit period, it can be considered that a corresponding storage identifier has been automatically cleared from the preset cache space, at this time, it can be determined whether the subject entity performs the preset operation on the target object entity by directly judging "whether the query identifier is stored in the preset source storage space". Moreover, if it is judged that the query identifier is stored in the preset source storage space, but not stored in the preset cache space, it can be considered that although the query identifier has been cleared from the preset cache space, there is still a demand for querying the query identifier, so the query identifier can be rewritten in the preset cache space at this time, so as to facilitate the quick query of the query identifier next time and reduce the amount of back-to-source access.

In the technical scheme of the embodiment of the present disclosure, by storing second data corresponding to an object entity, whose difference between the second build time and the operation time is not greater than the first preset value, in the preset bit array, the preset operation by the subject entity on the object entities recently built can be recorded in the preset bit array. Accordingly, when checking whether the subject entity has performed the preset operation on the target object entity, because the recently built object entity is more liable to be used as the target object entity, most of judgment that subject entity have performed the preset operation on the target object entity can be covered by the data in the preset bit array, thereby further reducing the occupation of storage resources. On this basis, by storing the storage identifier corresponding to the object entity, whose difference between the second build time and the operation time is greater than the first preset value, in the preset cache space, the preset operation by the subject entity on the object entity built not recently can be recorded in the preset cache space, which can effectively supplement the judgment based on the preset bit array and further improve the judgment accuracy

In addition, the data processing method provided by the embodiment of this disclosure belongs to the same concept as the data processing method provided by the above-mentioned embodiment, and the technical details not described in detail in this embodiment can refer to the above-mentioned embodiment, and the same technical features have the same beneficial effects in this embodiment as that in the above-mentioned embodiment.

This embodiment of the present disclosure can be combined with various alternatives in the data processing method provided in the above embodiment. The data processing method provided in this embodiment describes in detail the processing steps, such as resizing and rebuilding, etc., of the preset bit array. By dynamically resizing the preset bit arrays hierarchically, instead of allocating an extra large space for each preset bit array at first, not only the storage resources can be saved and be allocated as needed, but also the accuracy of judging whether the subject entity performs the preset operation on the target object entity based on the preset bit array can be guaranteed. By rebuilding the preset bit array under the condition that the preset bit array cannot continue to be resized, the useless data in the preset bit array can be cleared, the reasonable usage of the storage resources in the preset bit array can be realized, and the accuracy of judging whether the subject entity performs the preset operation on the target object entity based on the preset bit array can be improved.

The data processing method provided by the embodiment of the present disclosure may further include:
when a fill ratio of the preset bit array is greater than a second preset value, determining a current layer number of the preset bit array; determining an actual resizing space of a next-layer array of the preset bit array, based on a preset resizing space corresponding to the current layer number and a current available space of the subject entity; and building the next-layer array according to the actual resizing space for storing the second data.

Since 1 at the same position in the preset bit array may correspond to a plurality of second data, if 1 at a certain position in the preset bit array is cleared, it may affect the judgment of whether a plurality of object entities are subjected to the preset operation. Therefore, the data in the preset bit array cannot be deleted at will. With more and more second data written in the preset bit array, more and more bits in the preset bit array are set to 1, so it can be considered that the fill ratio will be larger and larger. When the fill ratio of the preset bit array is large to a certain extent, the possibility of the first data storing in the preset bit array will also increase, and the misjudgment rate of judging whether the subject entity performs the preset operation on the target object entity based on the data in the preset bit array will increase. At this time, in order to ensure the accuracy of judgment, more storage spaces need to be consumed as the preset cache space to assist the judgment of the preset bit array, which is not conducive to the judgment service under the condition of limited resources.

In an embodiment of the present disclosure, a second preset value can be preset according to a specific application scenario, so that when the fill ratio is greater than the second preset value, it can be characterized that the misjudgment rate of judging whether the subject entity performs a preset operation on the target object entity based on the data in the preset bit array has risen to the allowable critical value (for example, 2.5%) in the application scenario. At this point, the preset bit array can be resized.

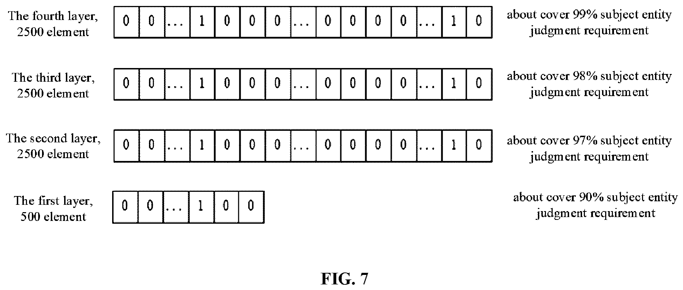

In this embodiment, the preset bit array can be resized in a manner of dynamic hierarchical resizing. For example, FIG. 7 is a hierarchical schematic diagram of a preset bit array in a data processing method provided by an embodiment of the present disclosure. As shown in FIG. 7, the maximum number of layers to which the preset bit array is allowed to be resized and the space of the preset bit array of each layer can be preset according to specific application scenarios. As shown in FIG. 7, the maximum number of layers to which the preset bit array is allowed to be resized is four, and the first layer can store 500 elements, and the second to fourth layers each can store 2500 elements, and each element can represent that the subject entity performs the preset operation on the object entity once.

In the scenario corresponding to FIG. 7, the 500 elements in the first layer can cover about 90% of the needs of the subject entity to judge whether to perform the preset operation on the target object entity; 3000 elements obtained by the first layer adding the second layer can cover about 97% of the needs of the subject entity to judge whether to perform the preset operation on the target object entity; the 5500 elements from the first layer to the third layer can cover about 98% of the needs of the subject entity to judge whether to perform the preset operation on the target object entity; the 8000 elements from the first layer to the fourth layer can cover about 99% of the needs of the subject entity to judge whether to perform the preset operation on the target object entity. It can be considered that the maximum available space of each subject entity may be the sum of the spaces of a preset bit array of each layer, as shown in FIG. 7, the maximum available space of the subject entity is 8000 elements.

Take FIG. 7 as an example, the preset bit array can be a first layer of array at first, and then the second, third and fourth layers of arrays can be built in turn, so as to implement dynamic hierarchical resizing of the preset bit array. Among them, for a preset bit array of each layer, a corresponding second preset value can be set. Illustratively, the dynamic hierarchical resizing of the preset bit array may include:
The second data can be stored in the preset bit array of first layer;
when the fill ratio in the preset bit array of the first layer is greater than a second preset value corresponding to the layer, it is determined that the current layer number is the first layer;
The space of the array at next layer to the current layer (i.e. the second layer) can be regarded as the preset resizing space corresponding to the current layer, and the difference between the maximum available space of the subject entity and the filled space in the built preset bit array (i.e. the difference between 8000 and the filled space in the preset bit array of the first layer) can be regarded as the current available space;
The smaller one of the preset resizing space and the current available space can be used as an actual resizing space (that is, the space of the second layer of array), to avoid the waste of storage resources caused by excessive one-time resizing;
The next-layer array can be built according to the actual resizing space (that is, the second layer of array can be built).

After that, the above steps can be repeated to store the newly generated second data into the preset bit array of a second layer, and when the fill ratio of the preset bit array of the second layer is greater than the corresponding second preset value, the preset bit array of a third layer can be resized. Similarly, the above steps can be repeated again, and by judging whether the fill ratio of the preset bit array of third layer is greater than the corresponding second preset value, the resizing of the preset bit array of a fourth layer can be performed, so that the dynamic hierarchical resizing of the preset bit array can be realized.

In this embodiment, judging whether the fill ratio of the preset bit array is greater than the second preset value can occur before or after each time when the second data is written into the preset bit array, and the judgment can be performed at intervals, while its trigger timing is not strictly limited.

According to the embodiment of the present disclosure, by dynamically resizing the preset bit arrays hierarchically, instead of allocating an extra large space for each preset bit array at first, not only the storage resources can be saved and be allocated as needed, but also the accuracy of judging whether the subject entity performs the preset operation on the target object entity based on the preset bit array can be guaranteed, and the occupation of cache resources and the calling of back-to-source service can be reduced.

In addition, in some alternative implementations, after determining the actual resizing space of a next-layer array of the preset bit array, the method can further include:
when the actual resizing space does not meet a space required for current writing of the second data, acquiring a previous rebuild time of the preset bit array; when a difference between the rebuild time and the current time is greater than or equal to a third preset value, rebuilding the preset bit array.

Among them, the case that the actual resizing space does not meet a space required for current writing of the second data can be considered that the resizing of the preset bit array cannot be continued. Referring to the above dynamic resizing process of the preset bit array, after the resizing of the second, third and fourth layer of arrays is completed, the current layer is the fourth layer. At this time, since the maximum number of layers that is allowed to be resized to is 4, if the fill ratio in the preset bit array of a fourth layer is greater than the second preset value corresponding to this layer, the preset resizing space corresponding to the current layer can be considered as 0, even if the subject entity still has the current available space, a smaller one between the two can be taken, so that the actual resizing space is still 0. At this time, the actual resizing space does not meet the space required for current writing of the second data, and the acquired previous rebuild time is null, then the preset bit array can be directly rebuilt for the first time, and the rebuild time can be recorded.

The first rebuilding of the preset bit array can include: building a new preset bit array of a first layer based on the sum of the filled spaces of preset bit array of each layer that has been built; acquiring a third identifier of a rebuilt object entity in a preset source storage space; wherein, the rebuilt object entity may include an object entity whose difference between the second build time and the current rebuild time is less than or equal to a first preset value, and on which the subject entity has performed the preset operation; processing the third identifier through a preset function to obtain third data; storing the third data into the new preset bit array of the first layer.

By determining the rebuilt object entity based on the first preset value, the preset operation by the subject entity on the recently built object entity can be recorded into the rebuilt preset bit array, thereby realizing the reasonable usage of storage resources in the preset bit array, and improving the accuracy of judging whether the subject entity performs the preset operation on the target object entity based on the preset bit array.

After the preset bit array is rebuilt for the first time, the preset bit array becomes a first layer of array with a larger space. At this time, the dynamic hierarchical resizing step can still be performed, and the maximum number of layers that is allowed to be resized to and the space of the preset bit array of each layer except the first layer can still refer to the preset value before rebuilding.

In the process of resizing the preset bit array rebuilt for the first time, when the actual resizing space does not meet the space required for current writing of the second data, the previous rebuild time of the preset bit array can be acquired; when the difference between the rebuild time and the current time is greater than or equal to the third preset value, the preset bit array can be rebuilt again. Among them, a third preset value (for example, 20 days) can be preset according to the actual application scenario, so as to control the rebuilding frequency and avoid frequent rebuilding of the preset bit array in a short period of time and wasting of resources.

In these alternative implementations, when the preset bit array cannot continue to be resized any more, the preset bit array can be rebuilt, the useless data in the preset bit array can be cleared, so that the reasonable usage of the storage resources in the preset bit array can be realized, and the accuracy of judging whether the subject entity performs the preset operation on the target object entity based on the preset bit array can be improved.

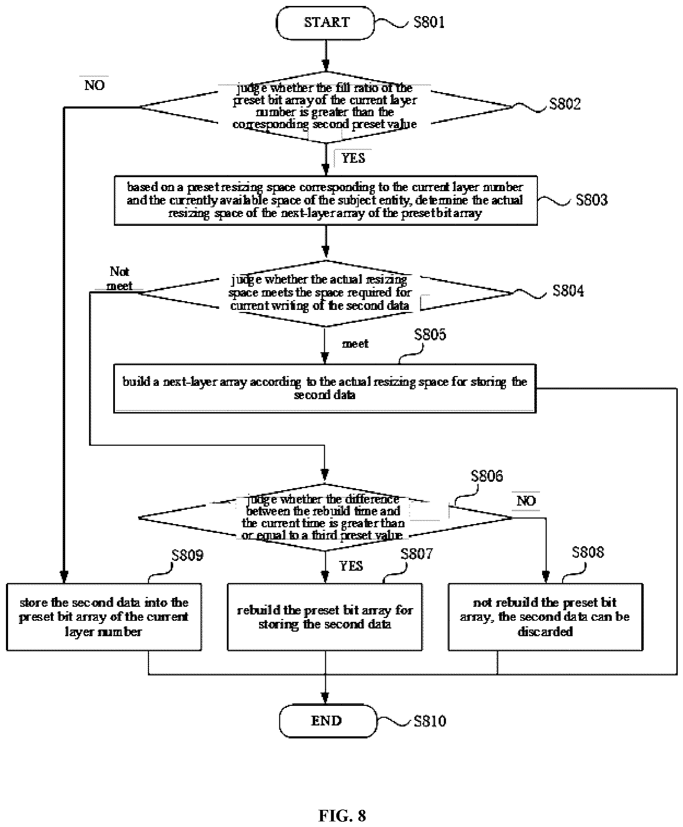

For example, FIG. 8 is a schematic frame diagram of processing a preset bit array in a data processing method provided by an embodiment of the present disclosure. Referring to FIG. 8, the step of processing, such as resizing, rebuilding, etc., the preset bit array, may include:
S801: in response to generation of second data, start the flow;
S802, judge whether the fill ratio of the preset bit array of the current layer number is greater than the corresponding second preset value; if yes, proceed to S803; if not, proceed to S809;
S803, based on a preset resizing space corresponding to the current layer number and the currently available space of the subject entity, determine the actual resizing space of the next-layer array of the preset bit array;
S804, judge whether the actual resizing space meets the space required for current writing of the second data; if yes, proceed to S805; if not, proceed to S806;
S805, build a next-layer array according to the actual resizing space for storing the second data; proceed to S810;
S806: acquire the previous rebuild time of the preset bit array, and judge whether the difference between the rebuild time and the current time is greater than or equal to a third preset value; if yes, proceed to S807; if not, proceed to S808;
S807: rebuild the preset bit array for storing the second data; proceed to S810;
S808: not rebuild the preset bit array, the second data can be discarded; proceed to S810;
S809, store the second data into the preset bit array of the current layer number; proceed to S810;
S810. End the process.

Although the preset array is not rebuilt and the second data is not written in the preset bit array when the difference between the rebuild time and the current time is less than the third preset value, the storage identifier corresponding to the object entity can still be stored in the preset source storage space, so as to ensure the normal execution of the service of judging whether the subject entity performs the preset operation on the target object entity.

In the technical scheme of the embodiment of the present disclosure, the steps of processing, such as resizing, rebuilding, etc. the preset bit array are described in detail. By dynamically resizing the preset bit arrays hierarchically, instead of allocating an extra large space for each preset bit array at first, not only the storage resources can be saved and be allocated as needed, but also the accuracy of judging whether the subject entity performs the preset operation on the target object entity based on the preset bit array can be guaranteed. By rebuilding the preset bit array under the condition that the preset bit array cannot continue to be resized, the useless data in the preset bit array can be cleared, the reasonable usage of the storage resources in the preset bit array can be realized, and the accuracy of judging whether the subject entity performs the preset operation on the target object entity based on the preset bit array can be improved.

In addition, the data processing method provided by the embodiment of this disclosure belongs to the same concept as the data processing method provided by the above-mentioned embodiment, and the technical details not described in detail in this embodiment can refer to the above-mentioned embodiment, and the same technical features have the same beneficial effects in this embodiment as that in the above-mentioned embodiment.

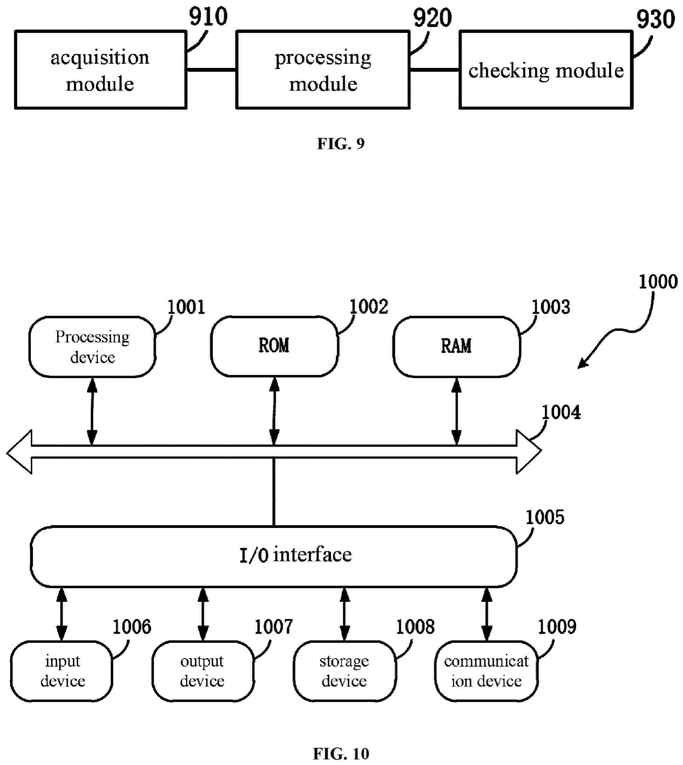

FIG. 9 is a schematic structural diagram of a data processing apparatus provided by an embodiment of the present disclosure. The data processing apparatus provided by this embodiment is suitable for checking whether the subject entity has performed a preset operation on the target object entity.

As shown in FIG. 9, the data processing apparatus provided by the embodiment of the present disclosure may include:
an acquisition module 910, configured to acquire a first identifier of a target object entity;
a processing module 920, configured to process the first identifier through a preset function in a preset Bloom filter, to obtain first data;
a checking module 930, configured to determine whether a subject entity performs a preset operation on the target object entity, based on a storage status of the first data in a preset bit array,
wherein data in the preset bit array may include: second data which is obtained by processing a second identifier of the object entity through the preset function in response to the subject entity performing the preset operation on the object entity.

In some alternative implementations, the checking module can be configured to:
when the first data is not stored in the preset bit array, determining that the subject entity does not perform the preset operation on the target object entity.
when the first data is stored in the preset bit array, determining a query identifier based on the first identifier and a subject identifier of the subject entity, and based on a storage status of the query identifier in a preset cache space, determining whether the subject entity performs the preset operation on the target object entity;
wherein the data in the preset cache space comprises a storage identifier which is generated based on a second identifier of the object entity and the subject identifier, when the second data has been stored in the preset bit array.

In some alternative implementations, the checking module can also be configured to:
when the query identifier is not stored in a preset cache space, determining whether the subject entity performs the preset operation on the target object entity based on a storage status of the query identifier in a preset source storage space;
wherein the data in the preset source storage space may include, in response to the subject entity performing the preset operation on the object entity, a storage identifier generated based on the second identifier of the object entity and the subject identifier.

In some alternative implementations, the acquisition module can also be configured to:
acquire a first build time of a target object entity;
Accordingly, the processing module can be configured to:
   when a difference between the first build time and an acquisition time of acquiring the target object entity is less than or equal to a first preset value, process the first identifier through the preset function;
   wherein the data in the preset bit array may include: the second data which is obtained by processing the second identifier of the object entity through the preset function, when the subject entity performs the preset operation on the object entity and a difference between a second build time of the object entity and an operation time when the subject entity performs the preset operation on the object entity is less than or equal to the first preset value.

In some alternative implementations, the processing module can also be configured to:
when the difference between the first build time and the acquisition time is greater than the first preset value, determine a query identifier based on the first identifier and the subject identifier of the subject entity;
Accordingly, the checking module may be configured to:
determine whether the subject entity performs the preset operation on the target object entity based on the storage status of the query identifier in the preset cache space;
wherein, the data in the preset cache space may include: a storage identifier which is generated based on a second identifier of the object entity and the subject identifier, when the subject entity performs the preset operation on the object entity and a difference between the second build time of the object entity and the operation time is greater than the first preset value.

In some alternative implementations, the data processing apparatus may further include:
a resizing module, configured to, when a fill ratio of the preset bit array is greater than a second preset value, determine a current layer number of the preset bit array;
determine an actual resizing space of a next-layer array of the preset bit array, based on a preset resizing space corresponding to the current layer number and a current available space of the subject entity; and
build the next-layer array according to the actual resizing space for storing the second data.

In some alternative implementations, the data processing apparatus may further include:
a rebuilding module configured to, after determining the actual resizing space of a next-layer array of the preset bit array, when the actual resizing space does not meet a space required for current writing of the second data, acquire a previous rebuild time of the preset bit array;
when a difference between the rebuild time and the current time is greater than or equal to a third preset value, rebuild the preset bit array.

In some alternative implementations, the subject entity may include an account entity, the object entity may include a content entity, and the preset operation may include at least one of the following: like, dislike, forward, comment, and value attribute entity transfer.

The data processing apparatus provided by the embodiment of the present disclosure can execute the data processing method provided by any embodiment of the present disclosure, and has corresponding functional modules and beneficial effects.

It is worth noting that each unit and module included in the above apparatus are only divided according to functional logic, but the division is not so limited, as long as the corresponding functions can be realized; in addition, the specific name of each functional unit are only for the convenience of distinguishing from each other, instead of limiting the protection scope of the embodiment of the present disclosure.

FIG. 10 illustrates a structural schematic diagram of an electronic device provided by an embodiment of the present disclosure, as shown in FIG. 10, the electronic device 1000 may be a terminal device or a server. Among them, the terminal device of an embodiment of the present disclosure may include, but not limited to, mobile terminals such as mobile phones, notebook computers, digital broadcast receivers, PDA (Personal Digital Assistant), PAD (Portable Android Device), PMP (Portable Multimedia Player), vehicle-mounted terminals (such as vehicle-mounted navigation terminals), and fixed terminals such as digital TV and desktop computers. The electronic device shown in FIG. 10 is only an example, and should not bring any limitation to the functions and application scopes of the embodiments of the present disclosure.

As shown in FIG. 10, an electronic device 1000 may include a processing device (such as a central processing unit, a graphics processor, etc.) 1001, which may perform various appropriate actions and processes according to a program stored in a read-only memory (ROM) 1002 or a program loaded from a storage device 1008 into a random-access memory (RAM) 1003. In the RAM 1003, various programs and data required for the operation of electronic device 1000 are also stored. A processing device 1001, a ROM 1002 and a RAM 1003 are connected to each other through a bus 1004. An input/output (I/O) interface 1005 is also connected to the bus 1004.

Generally, the following devices can be connected to the I/O interface 1005: an input device 1006 including, for example, a touch screen, a touch pad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to communicate wirelessly or wired with other devices to exchange data. Although FIG. 10 shows an electronic device 1000 with various devices, it should be understood that it is not required to implement or have all the devices as shown. More or fewer devices may alternatively be implemented or provided.

In particular, according to embodiments of the present disclosure, the processes described above with reference to the flowcharts can be implemented as a computer software program. For example, an embodiment of the present disclosure includes a computer program product including a computer program carried on a non-transitory computer-readable medium, which contains program codes for executing the methods shown in the flowcharts. In such an embodiment, the computer program can be downloaded and installed from the network through the communication device 1009, or installed from the storage device 1008, or installed from the ROM 1002. When the computer program is executed by the processing device 1001, the above functions defined in the data processing methods of the embodiments of the present disclosure can be implemented.

In addition, the electronic device provided by the embodiment of this disclosure belongs to the same concept as the data processing method provided by the above-mentioned embodiment, and the technical details not described in detail in this embodiment can refer to the above-mentioned embodiment, and the present embodiment has the same beneficial effects as that in the above-mentioned embodiments.

The embodiment of the present disclosure provides a computer storage medium storing a computer program thereon, which, when executed by a processor, cause the data processing method provided by the above embodiments to be implemented.

It should be noted that the computer-readable medium mentioned above in the present disclosure can be a computer-readable signal medium or a computer-readable storage medium or any combination of such two. The computer-readable storage medium can be, for example, but not limited to, an electrical, magnetic, optical, electromagnetic, infrared, or semiconductor system, apparatus or device, or a combination of the above. More specific examples of computer-readable storage media may include, but not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, and can send, propagate or transmit a program for use by or in connection with an instruction execution system, apparatus or device. The program codes contained in the computer-readable medium can be transmitted by any suitable medium, including but not limited to wires, optical cables, RF (radio frequency) and the like, or any suitable combination of the above.

In some embodiments, the client and the server can communicate by using any currently known or future developed network protocol such as HTTP (Hyper Text Transfer Protocol), and can be interconnected with digital data communication in any form or medium (for example, communication network). Examples of communication networks include a local area network ("LAN"), a wide area network ("WAN"), the Internet (for example, the Internet) and end-to-end networks (for example, ad hoc end-to-end networks), as well as any currently known or future developed networks.

The above computer readable medium can be included in the above electronic device, or can exist alone, without being assembled in the electronic device.

The above computer readable medium can carry one or more programs, which, when executed by the electronic device, cause the electronic device to implement:
acquiring a first identifier of a target object entity; processing the first identifier through a preset function in a preset Bloom filter, to obtain first data; determining whether a subject entity performs a preset operation on the target object entity, based on a storage status of the first data in a preset bit array, wherein data in the preset bit array comprises: second data which is obtained by processing a second identifier of the object entity through the preset function, in response to the subject entity performing the preset operation on the object entity.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architectures, functions and operations of possible implementations of systems, methods and computer program products according to various embodiments of the present disclosure. In this regard, each block in the flowchart or block diagram may represent a module, a program clip, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The modules involved in the embodiments described in the present disclosure can be realized by software or hardware. Among them, the name of the module does not constitute the limitation of the module itself in some cases.

The functions described above herein may be at least partially performed by one or more hardware logic components. For example, without limitation, exemplary types of hardware logic components that can be used may include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, there is provided a data processing method, which may include:
acquiring a first identifier of a target object entity;
processing the first identifier through a preset function in a preset Bloom filter, to obtain first data;
determining whether a subject entity performs a preset operation on the target object entity, based on a storage status of the first data in a preset bit array,
wherein data in the preset bit array may include: second data which is obtained by processing a second identifier of the object entity through the preset function, in response to the subject entity performing the preset operation on the object entity.

In some alternative implementations, the determining whether a subject entity performs a preset operation on the target object entity, based on a storage status of the first data in a preset bit array, may include:
when the first data is not stored in the preset bit array, determining that the subject entity does not perform the preset operation on the target object entity.

In some alternative implementations, when the first data is not stored in the preset bit array, the determining that the subject entity does not perform the preset operation on the target object entity, may include:
determining a dimension in the first data whose value is 1; and

in response to that not all elements corresponding to the dimension in the preset bit array are 1, determining that the subject entity does not perform the preset operation on the target object entity.

In some alternative implementations, when the first data is stored in the preset bit array, determining a query identifier based on the first identifier and a subject identifier of the subject entity, and based on a storage status of the query identifier in a preset cache space, determining whether the subject entity performs the preset operation on the target object entity;
wherein the data in the preset cache space comprises a storage identifier which is generated based on a second identifier of the object entity and the subject identifier, when the second data has been stored in the preset bit array.

In some alternative implementations, the method may further include:
when the query identifier is not stored in a preset cache space, determining whether the subject entity performs the preset operation on the target object entity based on a storage status of the query identifier in a preset source storage space;
wherein the data in the preset source storage space comprises, in response to the subject entity performing the preset operation on the object entity, a storage identifier generated based on the second identifier of the object entity and the subject identifier.

In some alternative implementations, the method may further include:
acquiring a first build time of the target object entity;
accordingly, the processing the first identifier through a preset function in a preset Bloom filter, may include:
   when a difference between the first build time and an acquisition time of acquiring the target object entity is less than or equal to a first preset value, processing the first identifier through the preset function;
   wherein the data in the preset bit array comprises: the second data which is obtained by processing the second identifier of the object entity through the preset function, when the subject entity performs the preset operation on the object entity and a difference between a second build time of the object entity and an operation time when the subject entity performs the preset operation on the object entity is less than or equal to the first preset value.

In some alternative implementations, the method may further include:
when the difference between the first build time and the acquisition time is greater than the first preset value, determining a query identifier based on the first identifier and the subject identifier of the subject entity, and determining whether the subject entity performs the preset operation on the target object entity based on the storage status of the query identifier in the preset cache space;
wherein, the data in the preset cache space comprises: a storage identifier which is generated based on a second identifier of the object entity and the subject identifier, when the subject entity performs the preset operation on the object entity and a difference between the second build time of the object entity and the operation time is greater than the first preset value.

In some alternative implementations, the method may further include:
when a fill ratio of the preset bit array is greater than a second preset value, determining a current layer number of the preset bit array;
determining an actual resizing space of a next-layer array of the preset bit array, based on a preset resizing space corresponding to the current layer number and a current available space of the subject entity; and
building the next-layer array according to the actual resizing space for storing the second data.

In some alternative implementations, the method may further include:
after determining the actual resizing space of a next-layer array of the preset bit array, when the actual resizing space does not meet a space required for current writing of the second data, acquiring a previous rebuild time of the preset bit array;
when a difference between the rebuild time and the current time is greater than or equal to a third preset value, rebuilding the preset bit array.

In some alternative implementations, in response to the subject entity performing the preset operation on the object entity, processing the second identifier of the object entity through the preset function of the Bloom filter corresponding to the preset operation to obtain the second data.

In some alternative implementations, the subject entity comprises an account entity, the object entity comprises an account entity or a content entity, and the preset operation comprises at least one of the following: like, dislike, forward, comment, and value attribute entity transfer.
an acquisition module, configured to acquire a first identifier of a target object entity;
a processing module, configured to process the first identifier through a preset function in a preset Bloom filter, to obtain first data;
a checking module, configured to determine whether a subject entity performs a preset operation on the target object entity, based on a storage status of the first data in a preset bit array,
wherein data in the preset bit array comprises: second data which is obtained by processing a second identifier of the object entity through the preset function in response to the subject entity performing the preset operation on the object entity.

The above description is only a preferred embodiment of the present disclosure and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned disclosure concepts. For example, the above-mentioned features are replaced with the technical features with similar functions disclosed in this disclosure (but not limited to) to form a technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A data processing method, comprising:
acquiring a first identifier of a target object entity;
processing the first identifier through a preset function in a preset Bloom filter, to obtain first data;
determining whether a subject entity performs a preset operation on the target object entity, based on a storage status of the first data in a preset bit array,
wherein data in the preset bit array comprises: second data which is obtained by processing a second identifier of an object entity through the preset function, in response to the subject entity performing the preset operation on the object entity.

2. The data processing method of claim 1, wherein, the determining whether a subject entity performs a preset operation on the target object entity, based on a storage status of the first data in a preset bit array, comprises:
in response to that the first data is not stored in the preset bit array, determining that the subject entity does not perform the preset operation on the target object entity.

3. The data processing method of claim 1 or 2, wherein, in response to that the first data is not stored in the preset bit array, determining that the subject entity does not perform the preset operation on the target object entity, comprises:
determining a dimension in the first data whose value is 1; and
in response to that not all elements corresponding to the dimension in the preset bit array are **1,** determining that the subject entity does not perform the preset operation on the target object entity.

4. The data processing method of any one of claims 1 to 3, wherein the determining whether a subject entity performs a preset operation on the target object entity, based on a storage status of the first data in a preset bit array, comprises:
in response to that the first data is stored in the preset bit array, determining a query identifier based on the first identifier and a subject identifier of the subject entity, and based on a storage status of the query identifier in a preset cache space, determining whether the subject entity performs the preset operation on the target object entity;
wherein data in the preset cache space comprises a storage identifier which is generated based on a second identifier of an object entity and the subject identifier, in response to that the second data has been stored in the preset bit array.

5. The data processing method of any one of claims 2 to 4, further comprises:
in response to that the query identifier is not stored in a preset cache space, determining whether the subject entity performs the preset operation on the target object entity based on a storage status of the query identifier in a preset source storage space;
wherein data in the preset source storage space comprises, in response to the subject entity performing the preset operation on an object entity, a storage identifier generated based on the second identifier of the object entity and the subject identifier.

6. The data processing method of any one of claims 1 to 5, wherein the method further comprises:
acquiring a first build time of the target object entity;
the processing the first identifier through a preset function in a preset Bloom filter, comprises:
in response to that a difference between the first build time and an acquisition time of acquiring the target object entity is less than or equal to a first preset value, processing the first identifier through the preset function;
wherein the data in the preset bit array further comprises: the second data which is obtained by processing the second identifier of an object entity through the preset function, in response to that the subject entity performs the preset operation on the object entity and a difference between a second build time of the object entity and an operation time when the subject entity performs the preset operation on the object entity is less than or equal to the first preset value.

7. The data processing method of claim 6, further comprises:
in response to that the difference between the first build time and the acquisition time is greater than the first preset value, determining a query identifier based on the first identifier and the subject identifier of the subject entity, and determining whether the subject entity performs the preset operation on the target object entity based on a storage status of the query identifier in a preset cache space;
wherein, data in the preset cache space comprises: a storage identifier which is generated based on a second identifier of an object entity and the subject identifier, in response to that the subject entity performs the preset operation on the object entity and a difference between the second build time of the object entity and the operation time is greater than the first preset value.

8. The data processing method of any one of claims 1 to 7, further comprising:
in response to that a fill ratio of the preset bit array is greater than a second preset value, determining a current layer number of the preset bit array;
determining an actual resizing space of a next-layer array of the preset bit array, based on a preset resizing space corresponding to the current layer number and a current available space of the subject entity; and
building the next-layer array according to the actual resizing space for storing the second data.

9. The data processing method of claim 8, further comprising:
after determining the actual resizing space of the next-layer array of the preset bit array, in response to that the actual resizing space does not meet a space required for current writing of the second data, acquiring a previous rebuild time of the preset bit array;
in response to that a difference between the rebuild time and the current time is greater than or equal to a third preset value, rebuilding the preset bit array.

10. The data processing method of any one of claims 1-9, further comprises:
in response to the subject entity performing the preset operation on the object entity, processing the second identifier of the object entity through the preset function of the Bloom filter corresponding to the preset operation to obtain the second data.

11. The data processing method of any one of claims 1-10, wherein, the subject entity comprises an account entity, the object entity comprises an account entity or a content entity, and the preset operation comprises at least one of the following: like, dislike, forward, comment, and value attribute entity transfer.

12. A data processing apparatus, comprises:
an acquisition module, configured to acquire a first identifier of a target object entity;
a processing module, configured to process the first identifier through a preset function in a preset Bloom filter, to obtain first data;
a checking module, configured to determine whether a subject entity performs a preset operation on the target object entity, based on a storage status of the first data in a preset bit array,
wherein data in the preset bit array comprises: second data which is obtained by processing a second identifier of an object entity through the preset function in response to the subject entity performing the preset operation on the object entity.

13. An electronic device, comprising:
one or more processors;
a storage device for storing one or more programs;
wherein the one or more programs, when executed by the one or more processors, cause the one or more processors to implement the data processing method of any one of claims 1 to 11.

14. A storage medium comprising computer executable instructions, which, when executed by a computer processor, causes the data processing method of any one of claims 1 to 12 to be implemented.
